# EUROPEAN PATENT SPECIFICATION

(11) **EP 4 105 848 B1**
(45) Date of publication and mention of the grant of the patent: **03.12.2025**
(21) Application number: 21785015.5
(22) Date of filing: 15.03.2021
(51) Int. Cl.: G06N 20/00, G06F 18/214, G06F 18/21

(54) **METHOD AND APPARATUS FOR EVALUATING JOINT TRAINING MODEL**
VERFAHREN UND VORRICHTUNG ZUR BEWERTUNG EINES GELENKTRAININGSMODELLS
PROCÉDÉ ET APPAREIL POUR ÉVALUER UN MODÈLE D'APPRENTISSAGE CONJOINT

(30) Priority: 08.04.2020 CN 202010272019
(43) Date of publication of application: 21.12.2022
(73) Proprietor: BEIJING BYTEDANCE NETWORK TECHNOLOGY CO., LTD., Beijing 100041 (CN)
(72) Inventor: LI, Longyijia, Beijing 100190 (CN); WU, Di, Beijing 100190 (CN); CHEN, Cheng, Beijing 100190 (CN); FANG, Chenliaohui, Beijing 100190 (CN); ZHAO, Peng, Beijing 100190 (CN); XIE, Junyuan, Beijing 100190 (CN); CHEN, Yixiang, Beijing 100190 (CN); WU, Liangchao, Beijing 100190 (CN); CHANG, Long, Beijing 100190 (CN); LIU, Xiaobing, Beijing 100190 (CN)
(74) Representative: Marks & Clerk LLP
(86) International application number: PCT/CN2021/080878
(87) International publication number: WO 2021/203919

(56) References cited:
- WO-A1-2019/219846
- CN-A- 110 189 192
- CN-A- 110 309 587
- CN-A- 110 399 742
- CN-A- 110 442 457
- CN-A- 110 738 323
- CN-A- 110 874 484
- CN-A- 111 488 995
- US-A1- 2019 108 445
- YIN BO ET AL: "FDC: A Secure Federated Deep Learning Mechanism for Data Collaborations in the Internet of Things", IEEE INTERNET OF THINGS JOURNAL, IEEE, USA, vol. 7, no. 7, 14 January 2020 (2020-01-14), pages 6348 - 6359, XP011798229, DOI: 10.1109/JIOT.2020.2966778
- LU YUNLONG ET AL: "Blockchain and Federated Learning for Privacy-Preserved Data Sharing in Industrial IoT", IEEE TRANSACTIONS ON INDUSTRIAL INFORMATICS, IEEE SERVICE CENTER, NEW YORK, NY, US, vol. 16, no. 6, 18 September 2019 (2019-09-18), pages 4177 - 4186, XP011777066, ISSN: 1551-3203, [retrieved on 20200305], DOI: 10.1109/TII.2019.2942190
- FENG SIWEI ET AL: "Multi-Participant Multi-Class Vertical Federated Learning", ARXIV.ORG, 30 January 2020 (2020-01-30), Ithaca, XP093149947, Retrieved from the Internet <URL:https://arxiv.org/pdf/2001.11154.pdf> [retrieved on 20240410], DOI: 10.48550/arxiv.2001.11154

## Description

### CROSS REFERENCE OF RELATED APPLICATION

The present application claims the priority to Chinese Patent Application No. 202010272019.7, titled "METHOD AND APPARATUS FOR EVALUATING JOINT TRAINING MODEL", filed on April 08, 2020 with the State Intellectual Property Office of the PRC.

### FIELD

The present disclosure relates to technical field of computers, and particular to a method and an apparatus for evaluating a joint training model.

### BACKGROUND

With development of the artifical intelligence technology, machine learning is increasingly widely applied. In recent years, in order to solve the problem of data island and data privacy, a joint trainig model is utilized to establish a machine learning model without exposing original data. The joint training model is generally trained by adjusting model paramters based on model gradients tranmitted between multiple model training participating parties. Non-patent document: Feng Siwei ET AL: "Multi-Participant Multi-Class Vertical Federated Learning", arXiv.org, 30 January 2020 (2020-01-30), Ithaca, DOI: 10.48550/arxiv.2001.11154, discloses a computer-implemented method for optimizing model training by a plurality of participants jointly training a machine learning mode; it does not disclose however a preset model list wherein based on evaluation of data to the preset model condition, adjustment of the joint training model is applied by participants.

### SUMMARY

The invention is defined in the appended independent claims 1, 4 and 5. Preferred embodiments of the invention are set out in the appended dependent claims.

In a first aspect, a method for evaluating a joint training model is provided according to embodiments of the present disclosure. The method includes: receiving a model evaluation data request sent by a target device, where the target device includes a participant of the joint training model; obtaining a sample set matching with the model evaluation data request, where the matching sample set includes tagged data associated with the joint training model; and generating model evaluation data of the joint training model according to the matching sample set.

The model evaluation data request includes data division information, and the data division information indicates a division method of samples. The process of obtaining a sample set matching with the model evaluation data request includes: obtaining a sample set for training the joint training model; and selecting samples from the sample set according to the data division information, to form a sample set matching with the model evaluation data request.

In some embodiments, the generating model evaluation data of the joint training model according to the matching sample set includes: dividing the matching sample set into a training sample set and a test sample set; and generating index change information of the joint training model by using the matching sample set, where the index change information of the joint training model is used to indicate change of model evaluation data of the joint training model over time.

In some embodiments, the model evaluation data request further includes data search permission information. The data search permission information is used to indicate at least one dimension of the index change information. The method further includes: extracting model evaluation data matching with the data search permission information from the index change information; and sending the matching model evaluation data to the target device.

In a second aspect, an apparatus for evaluating a joint training model is provided according to embodiments of the present disclosure. The apparatus includes a receiving unit, an obtaining unit and a generating unit. The receiving unit is configured to receive a model evaluation data request sent by a target device, where the target device includes a participant of the joint training model. The obtaining unit is configured to obtain a sample set matching with the model evaluation data request. The matching sample set includes tagged data associated with the joint training model. The generating unit is configured to generate model evaluation data of the joint training model according to the matching sample set.

In some embodiments, the model evaluation data request includes data division information. The data division information indicates a division method of samples. The obtaining unit includes an obtaining module and a first generating module. The obtaining module is configured to obtain a sample set for training the joint training model. The first generating module is configured to select samples from the sample set according to the data division information, to form a sample set matching with the model evaluation data request.

In some embodiments of the present disclosure, the generating unit includes a division module and a second generating module. The division module is configured to divide the matching sample set into a training sample set and a test sample set. The second generating module is configured to generate index change information of the joint training model by using the matching sample set. The index change information of the joint training model is used to indicate change of model evaluation data of the joint training model over time.

In some embodiments, the model evaluation data request further includes data search permission information. The data search permission information is used to indicate at least one dimension of index change information. The apparatus further includes an extracting unit and a sending unit. The extracting unit is configured to extract model evaluation data matching with the data search permission information from the index change information. The sending unit is configured to send the matching model evaluation data to the target device.

In a third aspect, a system for evaluating a joint training model is provided according to embodiments of the present disclosure. The system includes a first participating terminal and a second participating terminal. The first participating terminal is configured to obtain a local sample set, where samples in the local sample set are tag-free data for training the joint training model; generate a model evaluation data request of a joint training model associated with the local sample set; and send the model evaluation data request to a second participating terminal. The second participating terminal and the first participating terminal jointly train the joint training model. The second participating terminal is configured to receive the model evaluation data request sent by the first participating terminal; obtain a sample set matching with the model evaluation data request, where the matching sample set includes tagged data associated with the joint training model; and generate model evaluation data of the joint training model according to the matching sample set.

In some embodiments, the model evaluation data request includes data division information. The first participating terminal is further configured to generate data division information according to feature dimensions of samples in the local sample set. The data division information is used to indicate a division method of samples.

In some embodiments, the first participating terminal is further configured to: obtain model evaluation data of the joint training model from the second participating terminal; and adjust the joint training model based on the model evaluation data.

In a fourth aspect, a server is provided according to embodiments of the present disclosure. The server includes: one or more processors; and a storage apparatus storing one or more programs. The one or more programs, when being executed by the one or more processors, cause the one or more processors to implement the method according to the first aspect.

In a fifth aspect, a computer readable medium storing computer programs is provided according to embodiments of the present disclosure. The programs are executed by a processor to implement the method according to the first aspect.

According to the method and apparatus for evaluating a joint training model in the embodiments of the present disclosure, a model evaluation data request sent by the target device is received. The target device includes a participant of the joint training model. Then, a sample set matching with the model evaluation data request is obtained. The matching sample set includes tagged data associated with the joint training model. Finally, model evaluation data of the joint training model is generated according to the matching sample set, thereby sharing an effect index of the joint training model without exposing original sample data, and thus providing timely and effective data reference basis for optimizing and improving of the joint training model.

### BRIEF DESCRIPTION OF THE DRAWINGS

Other features, objects and advantages of the present disclosure become more apparent with reference to detailed description of non-limiting embodiments in conjunction with the drawings hereinafter.
Figure 1 is a schematic structural diagram of a system according to an embodiment of the present disclosure;
Figure 2 is a flowchart of a method for evaluating a joint training model according to an embodiment of the present disclosure;
Figure 3 is a schematic diagram of an application scenario of a method for evaluating a joint training model according to an embodiment of the present disclosure;
Figure 4 is a flowchart of a method for evaluating a joint training model according to another embodiment of the present disclosure;
Figure 5 is a schematic structural diagram of an apparatus for evaluating a joint training model according to an embodiment of the present disclosure;
Figure 6 is a timing diagram of interaction between devices in a system for evaluating a joint training model according to an embodiment of the present disclosure; and
Figure 7 is a schematic structural diagram of an electronic device for implementing the embodiment of the present disclosure.

### DETAILED DESCRIPTION

The present disclosure is further described in detail with reference to the drawings and embodiments hereinafter. It should be understood that, embodiments described herein are only used to explain the present disclosure rather than limit the present disclosure. It should be noted that, for facilitating description, parts related to the present disclosure are shown in the drawings.

It should be noted that, embodiments in the present disclosure and features in the embodiments may be combined without a conflict. The present disclosure is described in detail with reference to the drawings in conjunction with the embodiments hereinafter.

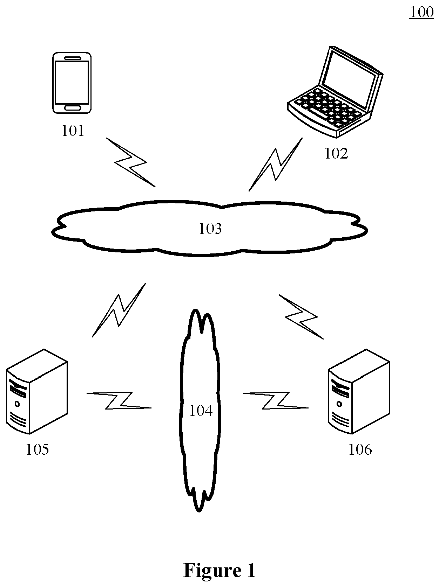

Figure 1 shows a schematic system structure 100 to which a method for evaluating a joint training model or an apparatus for evaluating a joint training model according to the present disclosure may be applied.

As shown in Figure 1, the system structure 100 may include: terminal devices 101, 102, networks 103, 104 and servers 105, 106. The network 103 is configured to provide a medium of a communication link between the terminal devices 101, 102 and the servers 105, 106. The network 104 is used to provide a medium of a communication link between the server 105 and the server 106. The networks 103 and 104 may include various connection types, such as wired connection, wireless communication link or optical fiber cable.

The terminal devices 101 and 102 interact with the servers 105 and 106 over the network 103, to receive or send message. The terminal devices 101 and 102 may be installed with various communication client applications, such as webpage browser application, shopping application, searching application, instant communication tool, mailbox client, social platform software and text editing application.

The terminal devices 101 and 102 may be implemented by hardware or software. When the terminal devices 101 and 102 are implemented by hardware, the terminal device may be an electronic device with a display screen and supporting data transmission, including but not limited to a smartphone, a tablet computer, an electronic book reader, a laptop portable computer and a desktop computer. When the terminal devices 101 and 102 are implemented by software, the terminal device may be installed in the electronic device listed above. The terminal device may be implemented as multiple software or software modules (for example, software or software modules for providing distributed service), or may be implemented as single software or software module. Implementations of the terminal device are not limited herein.

The servers 105 and 106 may be servers providing various services, for example a background server providing support for various communication client applications installed in the terminal devices 101 and 102. The background server may analyze a received data request and feeds back a processing result (such as webpage content recommended) to the terminal device. The servers 105 and 106 may transmit intermediate data over the network 104 to jointly train a machine learning model.

It should be noted that, the server may be implemented by hardware or software. When the server is implemented by hardware, the server may be implemented as a distributed server cluster consisting of multiple servers, or may be implemented as a single server. When the server is implemented by software, the server may be implemented as multiple software or software modules (for example, software or software module for providing distributed service), or may be implemented as a single software or software module. Implementations of the server are not limited herein.

It should be noted that, the method for evaluating a joint training model in the present disclosure is performed by the server 105 or the server 106. Accordingly, the apparatus for evaluating the joint training model is generally provided in the server 105 or the server 106.

It should be understood that, the numbers of terminal device, network and server in Figure 1 are only schematic. Any number of terminal device, network and server may be provided according to actual requirements.

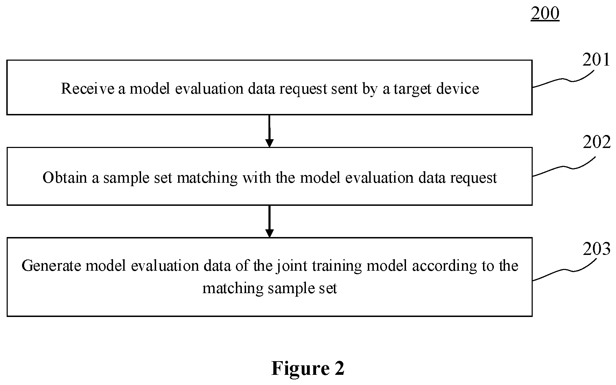

Reference is made to Figure 2 which shows a flow 200 of a method for evaluating a joint training model according to an embodiment of the present disclosure. The method includes steps 201 to 203 as follows.

In step 201, a model evaluation data request sent by a target device is received.

An object performing the method for evaluating a joint training model (such as the server 105 or the server 106 shown in Figure 1) receives a model evaluation data request sent by the target device via a wired manner or a wireless manner. The target device includes a participant of the joint training model. The joint training model may include various models jointly trained by multiple parties without exposing original data. Encrypted features and model intermediate results (such as gradients) are transmitted between participants of the joint training model, to adjust model parameters of sub-models trained by each participant. The model evaluation data request may be used to obtain model evaluation data of a joint training model jointly trained by the performing object and the target device. The model evaluation data includes at least one of: accuracy, recall rate, AUC (area under curve, area under ROC curve), PSI (Population Stability Index), and log loss.

It should be noted that, in an example, in an application scenario of the joint training model involving two participants, each of the two participants stores a sample set. Samples sets of the two participants generally have a certain intersection. Generally, samples of the sample set of only one participant have tags, and samples of the sample set of another participant include only features. Before training, the two participants need to align samples.

In some optional implementations of the embodiment, the model evaluation data request may further include data search permission information. The data search permission information may be used to indicate at least one dimension of the model evaluation data. The dimension may include but not limited at least one of: key of the model evaluation data, sampling granularity and a preset time period.

In step 202, a sample set matching with the model evaluation data request is obtained.

In the embodiment, the performing object may obtain a sample set matching with the model evaluation data request via a wired manner or a wireless manner. The matching sample set generally includes tagged data associated with the joint training model. That is, samples in the sample set may include features and tags corresponding to the features.

In an example, the performing object may obtain a sample set which is stored locally in advance and is used to train a joint training model indicated by the model evaluation data request. In another example, the performing object may obtain the matching sample set from an electronic device in communication connection with the performing object (for example a storing server). It should be noted that, in order to ensure data security, the electronic device in communication connection with the performing object and other participants of the joint training model do not directly share original sample data.

In some optional implementations of the embodiment, the model evaluation data request may include data division information. The data division information may be used to indicate a division method of samples. The sample identification may include a request identification in network connection, for example. The performing object may obtain the sample set matching with the model evaluation data request by performing the following steps.

In a first step, a sample set for training a joint training model is obtained.

In some implementations, the performing object may obtain a sample set for training the joint training model locally or from an electronic device in communication connection with the performing object. Generally, the sample set for training the joint training model may include aligned samples. It should be noted that, in order to ensure data security, the electronic device in communication connection with the performing object and other participants of the joint training model do not directly share original sample data.

In a second step, samples are selected from the sample set according to data division information, to form a sample set matching with the model evaluation data request.

In the implementations, according to the sample division method indicated by the data division information, the performing object selects samples from the sample set obtained in the first step, to form a sample set matching with the model evaluation data request. In an example, the data division information may include a list of sample identifications in a form of white list. The performing object may select samples matching with identifications in the list of sample identifications from the sample set obtained in the first step. The sample identification may include a character string which can uniquely identify the sample, such as a sequence number or a sample feature.

Based on the above optional implementations, the performing object may select a specific sample set matching with the data division information, to provide data basis for training of the joint training model and generating of the model evaluation data subsequently.

In step 203, model evaluation data of the joint training model is generated according to the matching sample set.

In the embodiment, according to the matching sample set obtained in step 202, the performing object may generate the model evaluation data of the joint training model in various manners. In an example, the performing object may train the model with the sample set of the joint training model indicated by the model evaluation data request, so as to generate model evaluation data matching with the model evaluation data request. For example, the model evaluation data request is used to indicate accuracy data of the obtained model, the performing object generates an accuracy index of the above model according to test results of the trained model. In an example, the performing object may generate various model evaluation data sets of the model when training of the model is finished. The performing object may select model evaluation data matching with data indicated by the model evaluation data request from a model evaluation data set.

In some optional implementations of the embodiment, the performing object may send the generated model evaluation data of the joint training model to the target device, as response information of the model evaluation data request.

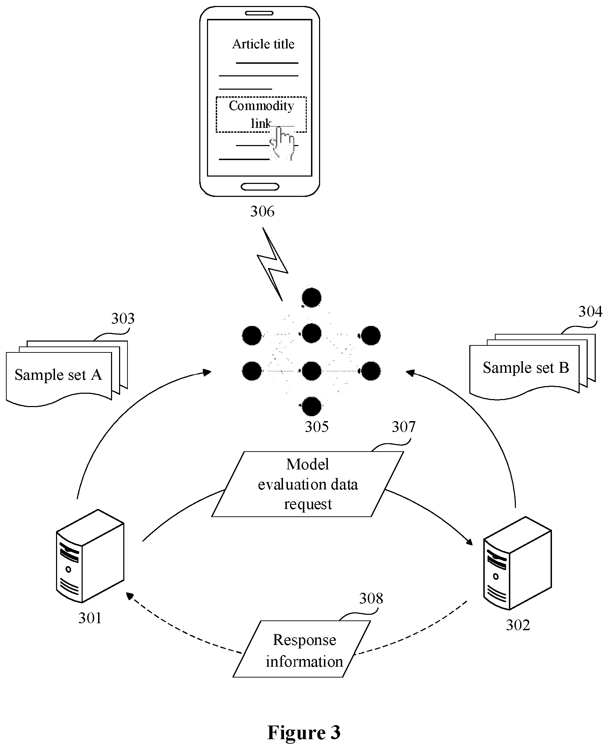

Reference is made to Figure 3 which shows a schematic diagram of an application scenario of a method for evaluating a joint training model according to an embodiment of the present disclosure. In the application scenario shown in Figure 3, a background server 301 of an information application and a background server 302 of a shopping application may jointly train a joint training model 305 by respectively utilizing a sample set A303 and a sample set B304. Samples in the sample set A303 may include various user attribute information (for example gender, age and preference). Samples in the sample set B304 may include user identifications and whether a user goes shopping (for example, adding a commodity in a shopping cart). Generally, the background server 301 and the background server 302 do not directly obtain sample data from each other. When the user uses the information application via the terminal 306, the background server 301 may obtain a commodity link by utilizing the trained joint training model 305, and send the commodity link to the terminal 306, so that the terminal 306 presents the commodity link to the user. The background server 301 sends a model evaluation data request 307 to the background server 302 to obtain an effect index (such as accuracy) of the joint training model 305. The background server 302 may obtain the sample set B304 matching with the model evaluation data request 307. According to the sample set B304, the background server 302 generates an effect index (such as accuracy) of the joint training model 305 trained with the sample set B 304, as the model evaluation data. In an example, the background server 302 may send response information 308 including the model evaluation data to the background server 301.

According to the conventional technology, efficiency of massive model training is improved by adopting a distributed training manner, resulting in that a participant including no tagged sample is difficult to obtain a training effect of the model in a case of ensuring data security. While according to the method described in the embodiment of the present disclosure, the model evaluation data of the joint training model is generated according to the model evaluation data request sent by the participant including no tagged sample, thereby sharing the effect index of the joint training model without exposing the original sample data, and thus providing timely and effective data reference basis for optimizing and improving of the joint training model.

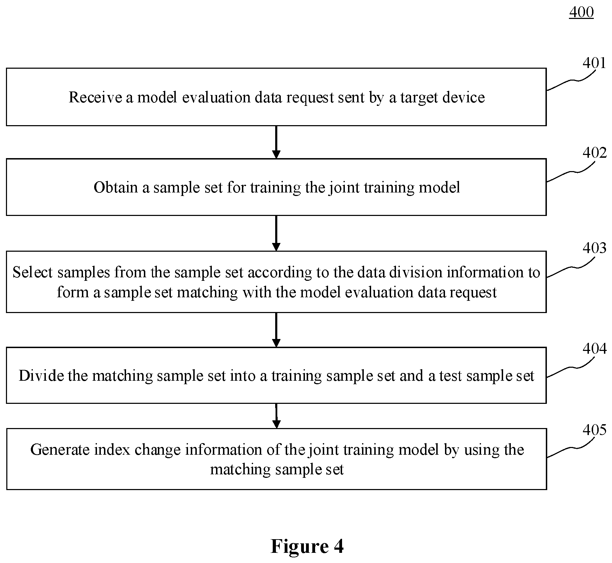

Reference is made to Figure 4 which shows a flow 400 of a method for evaluating a joint training model according to an embodiment of the present disclosure. The flow 400 includes steps 401 to 405 as follows.

In step 401, a model evaluation data request sent by a target device is received.

In the embodiment, the model evaluation data request may include data division information. The data division information may be used to indicate a division method of samples.

In some optional implementations of the embodiment, the model evaluation data request may include data search permission information. The data search permission information is used to indicate at least one dimension of index change information.

In step 402, a sample set for training the joint training model is obtained.

In step 403, samples are selected from the sample set according to data division information, to form a sample set matching with the model evaluation data request.

Steps 401, 402 and 403 correspond to steps 201 and 202 in the previous embodiments, and description of steps 201 and 202 in the optional implementations adapts to steps 401, 402 and 403. Details are not repeated herein.

In step 404, the matching sample set is divided into a training sample set and a test sample set.

In the embodiment, an object for performing the method for evaluating the joint training model (such as the server 105 or the sever 106 shown in Figure 1) may divide the matching sample set obtained in step 403 into a training sample set and a test sample set. The method for dividing the sample set may include but not limited to at least one of: hold-out, cross validation and bootstrapping.

In step 405, index change information of the joint training model is generated by utilizing the matching sample set.

In the embodiment, with the matching sample set, the performing object may generate the index change information of the joint training model via multiple manners. The index change information of the joint training model is used to indicate change of model evaluation data of the joint training model over a time dimension. The time dimension may include but not limited to at least one of time and global step. In an example, the performing object adjusts parameters of the joint training model by utilizing a training sample set in the matching sample set according to the time dimension, and then generates model evaluation data of the adjusted joint training model by utilizing a test sample set in the matching sample set. The model evaluation data may include but not limited to at least one of: accuracy, recall rate and AUC. The performing object may generate a curve showing change of the model evaluation data over time, as index change information of the joint training model.

In some optional implementations of the embodiment, based on data search permission information included in the model evaluation data request, the performing object may perform the following steps.

In a first step, model evaluation data matching with the data search permission information is extracted from the index change information.

In some implementations, based on the data search permission information included in the model evaluation data request, the performing object extracts the model evaluation data matching with the data search permission information from the generated index change information. The data search permission information may be used to indicate at least one dimension of the index change information. The dimension may include but not limited to at least one of time, identification of model evaluation data (for example a name), and sampling granularity.

In a second step, the matching model evaluation data is sent to the target device.

In some implementations, the performing object may send the matching model evaluation data extracted in the first step to the target device.

Based on the optional implementations, the target device may obtain required model evaluation data in the dimension such as time, name of model evaluation data (such as accuracy and AUC) by utilizing the data search permission information.

As shown in Figure 4, the flow 400 further includes: generating index change information of the joint training model with the divided matching sample set. Therefore, according to the technical solution described in the embodiment, the joint training model is trained by utilizing the divided sample set, and change information of the model evaluation data over time is generated during the model training process, thereby sharing the model evaluation index of the joint training model in a case of ensuring data security.

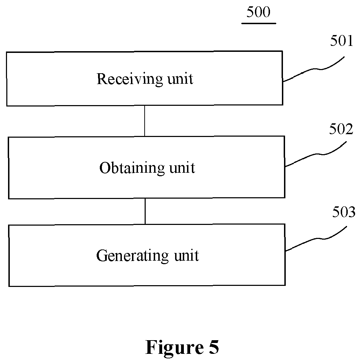

Reference is made to Figure 5 which shows an apparatus for evaluating a joint training model according to an embodiment of the present disclosure. The apparatus may perform the method described above. The apparatus embodiment corresponds to the method embodiment shown in Figure 2. The apparatus may be applied to various electronic devices.

As shown in Figure 5, an apparatus 500 for evaluating a joint training model according to the embodiment includes: a receiving unit 501, an obtaining unit 502 and a generating unit 503. The receiving unit 501 is configured to receive a model evaluation data request sent by a target device. The target device includes a participant of the joint training model. The obtaining unit 502 is configured to obtain a sample set matching with the model evaluation data request. The matching sample set includes tagged data associated with the joint training set. The generating unit 503 is configured to generate model evaluation data of the joint training model according to the matching sample set.

In the embodiment, for specific processing of the receiving unit 501, the obtaining unit 502 and the generating unit 503 in the apparatus 500 for evaluating the joint training model and corresponding technical effect, one may refer to related description of steps 201, 202 and 203 in the embodiment shown in Figure 2 or steps 401 to 405 in the embodiment shown in Figure 4. Details are not repeated herein.

In some optional implementations of the embodiment, the model evaluation data request includes data division information. The data division information is sued to indicate a division method of samples. The obtaining unit 502 may include an obtaining module (not shown) and a first generating module (not shown). The obtaining module is configured to obtain a sample set for training the joint training model. The first generating module is configured to select samples from the sample set according to the data division information, to form a sample set matching with the model evaluation data request.

In some optional implementations of the embodiment, the generating unit 503 may include a division module (not shown) and a second generating module (not shown). The division module is configured to divide the matching sample set into a training sample set and a test sample set. The second generating module is configured to generate index change information of the joint training model by utilizing the matching sample set. The index change information of the joint training model is used to indicate change of model evaluation data of the joint training model over time.

In some optional implementations of the embodiment, the model evaluation data request includes data search permission information. The data search permission information is used to indicate at least one dimension of the index change information. The apparatus 500 may further include: an extracting unit (not shown) and a sending unit (not shown). The extracting unit is configured to extract model evaluation data matching with the data search permission information from the index change information. The sending unit is configured to send the matching model evaluation data to the target device.

According to the apparatus provided in the embodiment of the present disclosure, the receiving unit 501 receives the model evaluation data request sent by the target device. The target device includes the participant of the joint training model. The obtaining unit 502 obtains a sample set matching with the model evaluation data request. The matching sample set includes tagged data associated with the joint training model. Finally, the generating unit 503 generates model evaluation data of the joint training model according to the matching sample set, thereby sharing the effect index of the joint training model without exposing the original sample data, and thus providing timely and effective data reference basis for optimizing and improving of the joint training model.

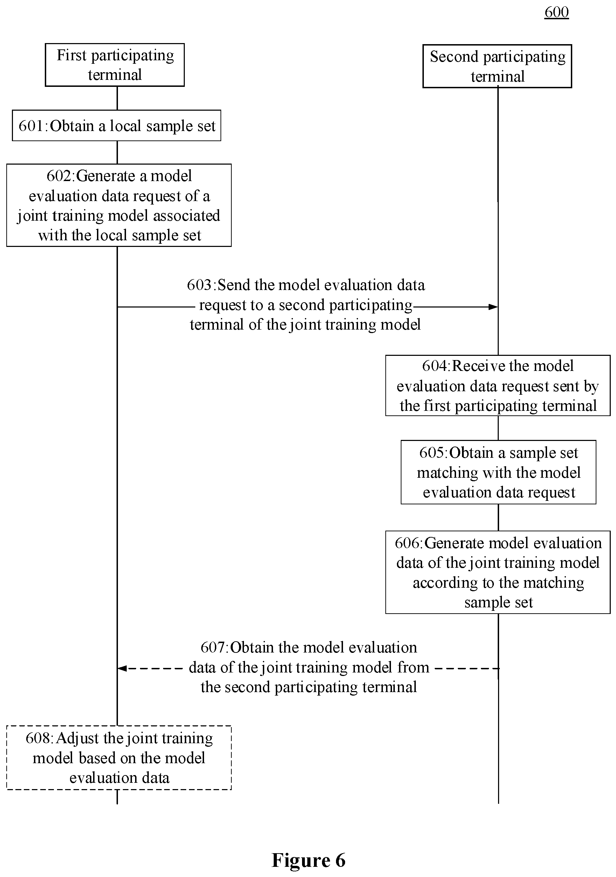

Reference is made to Figure 6 which shows timing 600 of interaction between devices in a system for evaluating a joint training model according to an embodiment of the present disclosure. The system includes a first participating terminal (such as the server 105 shown in Figure 1) and a second participating terminal (such as the server 106 shown in Figure 1). The first participating terminal is configured to: obtain a local sample set, where samples in the local sample set are tag-free data for training the joint training model; generate a model evaluation data request of the joint training model associated with the local sample set; and send the model evaluation data request to the second participating terminal. The second participating terminal and the first participating terminal jointly train the joint training model. The second participating terminal is configured to receive the model evaluation data request sent by the first participating terminal; obtain a sample set matching with the model evaluation data request, where the matching sample set includes tagged data associated with the joint training model; and generate model evaluation data of the joint training model according to the matching sample set.

In some optional implementations of the embodiment, the model evaluation data request may include data division information. The first participating terminal is configured to: generate data division information according to feature dimensions of samples in the local sample set. The data division information is used to indicate a division method of samples.

In some optional implementations of the embodiment, the first participating terminal is configured to: obtain model evaluation data of the joint training model from the second participating terminal; and adjust the joint training model based on the model evaluation data.

As shown in Figure 6, in step 601. the first participating terminal obtains a local sample set.

In the embodiment, the first participating terminal may obtain the local sample set. Samples in the local sample set are generally tag-free data for training the joint training model. That is, samples in the sample set generally include only features. Samples in the local sample set generally include more features than samples of the tagged data. In an example, the feature of the sample of the tagged data may include gender, age, region, preference and historic browsing information; and the feature of the sample of the tag-free data may include an account.

In step 602, the first participating terminal generates a model evaluation data request of the joint training model associated with the local sample set.

In the embodiment, the first participating terminal may generate the model evaluation data request of the joint training model associated with the local sample set obtained in step 601 via multiple manners. The model evaluation data request is used to obtain model evaluation data of the joint training model. The first participating terminal generates the model evaluation data request according to a preset model index list. The model index list includes at least one of: accuracy, recall rate, AUC, PSI and log loss. In an example, the first participating terminal may randomly select at least one index from the model index list. In another example, the first participating terminal generates the model evaluation data request for obtaining the model index according to information for indicating the model index which is sent by the terminal used by the technician.

In some optional implementations of the embodiment, the first participating terminal may generate data division information according to feature dimensions of samples in the local sample set obtained in step 601. The data division information is used to indicate a division method of samples. The feature dimension may include a user dimension (such as ID) and a user feature dimension (such as online duration). In an embodiment, the data division information may include a list of request identifications of network connection in a form of white list. In an example, the data division information may be a preset hash function. The preset hash function may be a security strategy function generated based on multiple encryption methods. Original data cannot be inferred from the security strategy function, thereby ensuring data security of the joint training model.

In step 603, the first participating terminal sends a model evaluation data request to the second participating terminal.

In the embodiment, the second participating terminal and the first participating terminal jointly train the joint training model.

In step 604, the second participating terminal receives the model evaluation data request sent by the first participating terminal.

In step 605, the second participating terminal obtains a sample set matching with the model evaluation data request.

In step 606, the second participating terminal generates model evaluation data of the joint training model according to the matching sample set.

Steps 604, 605 and 606 correspond to steps 201, 202 and 203 in the previous embodiment or correspond to steps 401 to 405 in the previous embodiment. Description of implementations of steps 201, 202 and 203 or steps 401 to 405 also adapts to steps 604, 605 and 606. Details are not repeated herein.

In the optional implementations of the embodiment, the first participating terminal may perform the fowling steps.

In step 607, the model evaluation data of the joint training model is obtained from the second participating terminal.

In step 608, the joint training model is adjusted based on the model evaluation data.

In some optional implementations, based on the model evaluation data, the first participating terminal may adjust the joint training model via multiple manners. The first participating terminal determines whether the model evaluation data meets a preset model adjustment condition. The preset model adjustment condition may include that model accuracy is less than a preset threshold. In response to determining that the model evaluation data meets the preset model adjust condition, the performing object adjusts the joint training model via multiple manners. For example, the performing object may train the joint training model with samples which have not been used for training. In another example, the performing object may adjust a feature insensitive to the model output (for example, replace region with age) in the samples.

According to the system for evaluating a joint training model provided in the embodiment of the present disclosure, the first participating terminal obtains the local sample set. Samples in the local sample set are tag-free data for training the joint training model. The first participating terminal generates a model evaluation data request of the joint training model associated with the local sample set. The first participating terminal sends the model evaluation data request to the second participating terminal. The second participating terminal and the first participating terminal jointly train the joint training model. The second participating terminal receives the model evaluation data request sent by the first participating terminal. The second participating terminal obtains the sample set matching with the model evaluation data request. The matching sample set includes tagged data associated with the joint training model. The second participating terminal generates the model evaluation data of the joint training model according to the matching sample set. In this case, the participant of the joint training model including no tagged sample generates and sends the model evaluation data request, and the participant including the tagged sample generates the model evaluation data of the joint training model, thereby sharing the effect index of the joint training model without exposing original sample data, and thus providing timely and effective data reference basis for optimizing and improving of the joint training model.

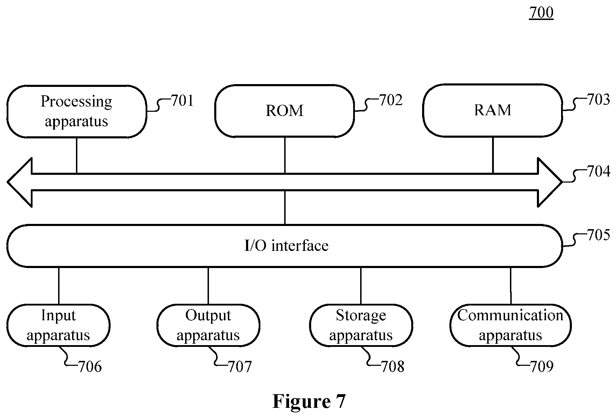

Reference is made to Figure 7 which shows a schematic structural diagram of an electronic device 700 (such as the server 105 shown in Figure 1) for implementing the embodiments of the present disclosure. The server shown in Figure 7 is only schematic, and does not limit the function and use scope of embodiments of the present disclosure in any manner.

As shown in Figure 7, the electronic device may include a processing apparatus (such as a central processor and a graphic processor) 701. The processing apparatus may perform various appropriate actions and processing by executing programs stored in a read-only memory (ROM) 702 or programs uploaded from a storage apparatus 708 to a random access memory (RAM) 703. Various programs and data required for operations of the electronic device are also stored in the RAM 703. The processing apparatus 701, the ROM 702 and the RAM 703 are connected to each other through a bus 704. An input/output (I/O) interface 705 is also connected to the bus 704.

Generally, the following components are connected to the I/O interface 705: an input apparatus 706 such as a touch screen, a touch panel, a keyboard, a mouse; an output apparatus 707 such as a liquid crystal display (LCD), a loudspeaker and a vibrator; a storage apparatus 708 such as a magnetic tape and a hard disk; and a communication apparatus 709. The communication apparatus 709 may allow the electronic device 700 to communicate with other device in a wired or wireless manner to exchange data. Although Figure 7 shows the electronic device 700 including multiple apparatuses, it should be understood that not all shown apparatuses are necessary. Alternatively, more or less apparatuses may be included. Each block in Figure 7 may represent one or more apparatuses according to requirements.

According to an embodiment of the present disclosure, a process described in the flowchart may be implemented by computer software programs. For example, according to an embodiment of the present disclosure, a computer program product including computer program carried on a computer readable medium is provided. The computer program includes program codes for performing the method shown in the flowchart. In such embodiment, the computer program may be downloaded and installed from the network through the communication apparatus 709, installed from the storage apparatus 708 or installed from the ROM 702. The computer program is executed by the processing apparatus 701 to perform functions defined in the method in the above embodiment of the present disclosure.

It should be noted that, the computer readable medium described in the present disclosure may be a computer readable signal medium, a computer readable storage medium or any combination thereof. The computer readable storage medium may include but not limited to a system, an apparatus or a device in an electric, magnetic, optical, electromagnetic, infrared or a semiconductor form, or any combination thereof. The computer readable storage medium may include but not limited to electric connection of one or more wires, a portable computer magnetic disk, a hard disk, a random access memory (RAM), a read-only memory (ROM), an erasable programmable read only memory (EPROM or a flash memory), an optical fiber, a portable compact disk read only memory (CD-ROM), an optical storage device, a magnetic storage device or any combination thereof. In the embodiments of the present disclosure, the computer readable storage medium may be a tangible medium including or storing programs. The programs may be used by an instruction execution system, apparatus or device, or may be used in combination with the instruction execution system, apparatus or device. In the embodiment of the present disclosure, a computer readable signal medium may include a data signal in a baseband or propagated as a part of carrier. The computer readable signal medium carries computer readable program codes. The propagated data signal may include an electromagnetic signal, an optical signal or any combination thereof. The computer readable signal medium may be any computer readable medium other than the computer readable storage medium. The computer readable signal medium may send, propagate or transmit programs used by the instruction execution system, apparatus or device or the programs used in combination with the instruction execution system, apparatus or device. The program code included in the computer readable medium may be transmitted via any appropriate medium, including but not limited to an electric wire, an optical fiber, radio frequency (RF) or any appropriate combination thereof.

The computer readable medium may be included in the electronic device, or may exist independently and is not installed in the electronic device. The computer readable medium carries one or more programs. The one or more programs are executed by the server, so that the server is configured to: receive a model evaluation data request sent by a target device, where the target device includes a participant of the joint training model; obtain a sample set matching with the model evaluation data request, where the matching sample set includes tagged data associated with the joint training model; and generate model evaluation data of the joint training model according to the matching sample set.

Computer program codes for performing operations of the present disclosure may be written by using one or more program design language or any combination. The program design language includes object oriented program design language such as Java, Smalltalk and C++, and further includes conventional process-type program design language such as "C" or similar program design language. The program codes may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a local area network (LAN) and a wide area network (WAN). Alternatively, the remote computer may connect to an external computer (such as achieving internet connection by services provided by the internet network service provider).

The flowcharts and block diagrams shown in drawings show a system architecture, function and operation which may be implemented by the system, method and computer program product according to the embodiments of the present disclosure. Each block in the flowcharts or the block diagram may represent a part of a module, a program section or codes including executable instructions for implementing specified logic functions. It should be noted that, in alternative embodiments, functions denoted in the blocks may be performed in an order different from the order denoted in the drawing. For example, operations in two blocks connected successively may be performed in parallel, or may be performed in an opposite order, depending on the involved function. It should be noted that, each block in the block diagrams and/or flowcharts, and a combination of blocks in the block diagrams and/or flowcharts may be implemented by a dedicated hardware system for performing specified functions or operations, or may be implemented by a combination of dedicated hardware and computer instructions.

Units involved in the embodiments of the present disclosure may be implemented by software or hardware. The units may be provided in a processor. For example, a processor includes a receiving unit, an obtaining unit and a generating unit. Names of the units do not limit the units in some cases. For example, the receiving unit may be described as a unit receiving a model evaluation data request sent by the target device. The target device includes the participant of the joint training model.

It should be understood by those skilled in the art that the scope of the embodiments of the present disclosure is not limited by the technical solutions formed by specific combinations of the above technical features.

## Claims

1. A computer-implemented method for optimizing model training by a plurality of participants jointly training a machine learning model, comprising:
receiving, by a server, a model evaluation data request generated by and sent from a target device, wherein the target device is a first participant of jointly training the machine learning model, wherein the server is a second participant of jointly training the machine learning model, wherein the model evaluation data request is a request generated according to a preset model index list, wherein the preset model index list comprises an effect index of the machine learning model after being trained by the second participant, and wherein the model evaluation data request comprises data division information indicative of sample identifications, the data division information indicates a division method of samples, wherein the model evaluation data includes at least one of: accuracy, recall rate, area under ROC curve, Population Stability Index, and log loss, wherein the first participant determines whether the model evaluation data meets a preset model adjustment condition, and in response to determining that the model evaluation data meets the preset model adjust condition, the second participant adjusts the joint training model;
determining, by the server, a sample set based on the model evaluation data request, the sample set matching with the data division information comprised in the model evaluation data request, wherein the matching sample set comprises tagged data for training the machine learning model; and
generating, by a server, model evaluation data indicative of the effect index based on training the machine learning model with the matching sample set; and
wherein the determining, by the server, a sample set based on the model evaluation data request comprises:
obtaining, by the server, a sample set for training the machine learning model; and
selecting, by the server, samples from the sample set according to the data division information, to form a sample set matching with the data division information comprised in the model evaluation data request.

2. The method according to claim 1, wherein the generating model evaluation data comprises:
dividing the matching sample set into a training sample set and a test sample set; and
generating index change information of the machine learning model by using the matching sample set, wherein the index change information of the machine learning model is used to indicate change of model evaluation data of the machine learning model over time.

3. The method according to claim 2, wherein the model evaluation data request further comprises data search permission information, wherein the data search permission information is used to indicate at least one dimension of the index change information;
and wherein the method further comprises:
extracting model evaluation data matching with the data search permission information from the index change information; and
sending the matching model evaluation data to the target device.

4. An apparatus for optimizing model training by a plurality of participants jointly training a machine learning model, comprising:
a receiving unit, configured to receive a model evaluation data request generated by and sent from a target device, wherein the target device is a first participant of jointly training the machine learning model, wherein the apparatus is a second participant of jointly training the machine learning model, wherein the model evaluation data request is a request generated according to a preset model index list, wherein the preset model index list comprises an effect index of the machine learning model after being trained by the second participant, and wherein the model evaluation data request comprises data division information indicative of sample identifications, the data division information indicates a division method of samples, wherein the model evaluation data includes at least one of: accuracy, recall rate, area under ROC curve, Population Stability Index, and log loss, wherein the first participant determines whether the model evaluation data meets a preset model adjustment condition, and in response to determining that the model evaluation data meets the preset model adjust condition, the second participant adjusts the joint training model;
a determining unit, configured to determine a sample set based on the model evaluation data request, the sample set matching with the data division information comprised in the model evaluation data request, wherein the matching sample set comprises tagged data for training the machine learning model; and
a generating unit, configured to generate model evaluation data indicative of the effect index based on training the machine learning model with the matching sample set; and
wherein the determining unit, further configured to obtain a sample set for training the machine learning model, and select samples from the sample set according to the data division information, to form a sample set matching with the data division information comprised in the model evaluation data request.

5. A system for optimizing model training by a plurality of participants jointly training a machine learning model, comprising:
a first participating terminal, configured to: obtain a local sample set, wherein samples in the local sample set are tag-free data for training the machine learning model; generate a model evaluation data request based on the local sample set; send the model evaluation data request to a second participating terminal, wherein the second participating terminal and the first participating terminal jointly train the machine learning model, wherein the model evaluation data request is a request generated according to a preset model index list, wherein the preset model index list comprises an effect index of the machine learning model after being trained by the second participating terminal, and wherein the model evaluation data request comprises data division information indicative of sample identifications, the data division information indicates a division method of samples, wherein the model evaluation data includes at least one of: accuracy, recall rate, area under ROC curve, Population Stability Index, and log loss, wherein the first participant determines whether the model evaluation data meets a preset model adjustment condition, and in response to determining that the model evaluation data meets the preset model adjust condition, the second participant adjusts the joint training model; and
the second participating terminal, configured to receive the model evaluation data request sent by the first participating terminal; determine a sample set matching with the data division information comprised in the model evaluation data request, wherein the matching sample set comprises tagged data for training the machine learning model; and generate model evaluation data indicative of the effect index based on training the machine learning model with the matching sample set; and
the second participating terminal, further configured to obtain a sample set for training the machine learning model, and select samples from the sample set according to the data division information, to form a sample set matching with the data division information comprised in the model evaluation data request.

6. The system according to claim 5, wherein the first participating terminal is further configured to: generate data division information according to feature dimensions of samples in the local sample set, wherein the data division information is used to indicate a division method of samples.

7. The system according to claim 5 or 6, wherein the first participating terminal is further configured to:
obtain model evaluation data of the machine learning model from the second participating terminal; and
adjust the machine learning model based on the model evaluation data.

8. A server, comprising:
one or more processors; and
a storage apparatus storing one or more programs,
wherein the one or more programs, when being executed by the one or more processors, cause the one or more processors to implement the method according to any one of claims 1 to 3.

9. A computer readable medium storing computer programs, wherein the programs are executed by a processor to implement the method according to any one of claims 1 to 3.

## Patentansprüche

1. Computerimplementiertes Verfahren zum Optimieren eines Modelltrainings durch eine Vielzahl von Teilnehmern, die gemeinsam ein Maschinenlernmodell trainieren, umfassend:
Empfangen, durch einen Server, einer von einer Zielvorrichtung generierten und gesendeten Modellbewertungsdatenanforderung, wobei die Zielvorrichtung ein erster Teilnehmer beim gemeinsamen Trainieren des Maschinenlernmodells ist, wobei der Server ein zweiter Teilnehmer beim gemeinsamen Trainieren des Maschinenlernmodells ist, wobei die Modellbewertungsdatenanforderung eine gemäß einer voreingestellten Modellindexliste generierte Anforderung ist, wobei die voreingestellte Modellindexliste einen Effektindex des Maschinenlernmodells umfasst, nachdem dieses von dem zweiten Teilnehmer trainiert wurde, und wobei die Modellbewertungsdatenanforderung Datenaufteilungsinformationen umfasst, die Probenidentifikationen angeben, wobei die Datenaufteilungsinformationen ein Aufteilungsverfahren für Proben angeben, wobei die Modellbewertungsdaten mindestens eines des Folgenden beinhalten: Genauigkeit, Rückrufrate, Fläche unter der ROC-Kurve, Populationsstabilitätsindex und logarithmischer Verlust, wobei der erste Teilnehmer bestimmt, ob die Modellbewertungsdaten eine voreingestellte Modellanpassungsbedingung erfüllen, und infolgedessen, dass bestimmt wird, dass die Modellbewertungsdaten die voreingestellte Modellanpassungsbedingung erfüllen, der zweite Teilnehmer das gemeinsame Trainingsmodell anpasst;
Bestimmen, durch den Server, eines Probensatzes basierend auf der Modellbewertungsdatenanforderung, wobei der Probensatz mit den in der Modellbewertungsdatenanforderung umfassten Datenaufteilungsinformationen übereinstimmt, wobei der übereinstimmende Probensatz markierte Daten zum Trainieren des Maschinenlernmodells umfasst; und
Generieren, durch einen Server, von Modellbewertungsdaten, die den Effektindex angeben, basierend auf einem Trainieren des Maschinenlernmodells mit dem übereinstimmenden Probensatz; und
wobei das Bestimmen, durch den Server, eines Beispielsatzes basierend auf der Modellbewertungsdatenanforderung Folgendes umfasst:
Erhalten, durch den Server, eines Probensatzes zum Trainieren des Maschinenlernmodells; und
Auswählen, durch den Server, von Proben aus dem Beispielsatz gemäß den Datenaufteilungsinformationen, um einen Probensatz zu bilden, der mit den in der Modellbewertungsdatenanforderung umfassten Datenaufteilungsinformationen übereinstimmt.

2. Verfahren nach Anspruch 1, wobei das Generieren von Modellbewertungsdaten Folgendes umfasst:
Aufteilen des übereinstimmenden Stichprobensatzes in einen Trainingsprobensatz und einen Testprobensatz; und
Generieren von Indexänderungsinformationen des Maschinenlernmodells unter Verwendung des übereinstimmenden Probensatzes, wobei die Indexänderungsinformationen des Maschinenlernmodells verwendet werden, um Änderungen von Modellbewertungsdaten des Maschinenlernmodells im Laufe der Zeit anzugeben.

3. Verfahren nach Anspruch 2, wobei die Modellbewertungsdatenanforderung weiter Datensuchberechtigungsinformationen umfasst, wobei die Datensuchberechtigungsinformationen verwendet werden, um mindestens eine Dimension der Indexänderungsinformationen anzugeben;
und wobei das Verfahren weiter Folgendes umfasst:
Extrahieren von Modellbewertungsdaten, die mit den Datensuchberechtigungsinformationen übereinstimmen, aus den Indexänderungsinformationen; und
Senden der übereinstimmenden Modellbewertungsdaten an die
Zielvorrichtung.

4. Einrichtung zum Optimieren eines Modelltrainings durch eine Vielzahl von Teilnehmern, die gemeinsam ein Maschinenlernmodell trainieren, umfassend:
eine Empfangseinheit, die dazu konfiguriert ist, eine von einer Zielvorrichtung generierte und gesendete Modellbewertungsdatenanforderung zu empfangen, wobei die Zielvorrichtung ein erster Teilnehmer beim gemeinsamen Trainieren des Maschinenlernmodells ist, wobei die Einrichtung ein zweiter Teilnehmer beim gemeinsamen Trainieren des Maschinenlernmodells ist, wobei die Modellbewertungsdatenanforderung eine gemäß einer voreingestellten Modellindexliste generierte Anforderung ist, wobei die voreingestellte Modellindexliste einen Effektindex des Maschinenlernmodells umfasst, nachdem dieses von dem zweiten Teilnehmer trainiert wurde, und wobei die Modellbewertungsdatenanforderung Datenaufteilungsinformationen umfasst, die Probenidentifikationen angeben, wobei die Datenaufteilungsinformationen ein Aufteilungsverfahren für Proben angeben, wobei die Modellbewertungsdaten mindestens eines des Folgenden beinhalten: Genauigkeit, Rückrufrate, Fläche unter der ROC-Kurve, Populationsstabilitätsindex und logarithmischer Verlust, wobei der erste Teilnehmer bestimmt, ob die Modellbewertungsdaten eine voreingestellte Modellanpassungsbedingung erfüllen, und infolgedessen, dass bestimmt wird, dass die Modellbewertungsdaten die voreingestellte Modellanpassungsbedingung erfüllen, der zweite Teilnehmer das gemeinsame Trainingsmodell anpasst;
eine Bestimmungseinheit, die dazu konfiguriert ist, einen Probensatz basierend auf der Modellbewertungsdatenanforderung zu bestimmen, wobei der Probensatz mit den in der Modellbewertungsdatenanforderung umfassten Datenaufteilungsinformationen übereinstimmt, wobei der übereinstimmende Probensatz markierte Daten zum Trainieren des Maschinenlernmodells umfasst; und
eine Generierungseinheit, die dazu konfiguriert ist, Modellbewertungsdaten, die den Effektindex angeben, basierend auf einem Trainieren des Maschinenlernmodells mit dem übereinstimmenden Probensatz zu generieren; und
wobei die Bestimmungseinheit weiter dazu konfiguriert ist, einen Probensatz zum Trainieren des Maschinenlernmodells zu erhalten und Proben aus dem Probensatz gemäß den Datenaufteilungsinformationen auszuwählen, um einen Probensatz zu bilden, der mit den in der Modellbewertungsdatenanforderung umfassten Datenaufteilungsinformationen übereinstimmt.

5. System zum Optimieren eines Modelltrainings durch eine Vielzahl von Teilnehmern, die gemeinsam ein Maschinenlernmodell trainieren, umfassend:
ein erstes teilnehmendes Endgerät, das für Folgendes konfiguriert ist: Erhalten eines lokalen Probensatzes, wobei die Proben im lokalen Probensatz markierungsfreie Daten zum Trainieren des Maschinenlernmodells sind; Generieren einer Modellbewertungsdatenanforderung basierend auf dem lokalen Probensatz; Senden der Modellbewertungsdatenanforderung an ein zweites teilnehmendes Endgerät, wobei das zweite teilnehmende Endgerät und das erste teilnehmende Endgerät gemeinsam das Maschinenlernmodell trainieren, wobei die Modellbewertungsdatenanforderung eine Anforderung ist, die gemäß einer voreingestellten Modellindexliste generiert wird, wobei die voreingestellte Modellindexliste einen Effektindex des Maschinenlernmodells umfasst, nachdem dieses von dem zweiten teilnehmende Endgerät trainiert wurde, und wobei die Modellbewertungsdatenanforderung Datenaufteilungsinformationen umfasst, die Probenidentifikationen angeben, wobei die Datenaufteilungsinformationen ein Aufteilungsverfahren für Proben angeben, wobei die Modellbewertungsdaten mindestens eines des Folgenden beinhalten: Genauigkeit, Rückrufrate, Fläche unter der ROC-Kurve, Populationsstabilitätsindex und logarithmischer Verlust, wobei der erste Teilnehmer bestimmt, ob die Modellbewertungsdaten eine voreingestellte Modellanpassungsbedingung erfüllen, und infolgedessen, dass bestimmt wird, dass die Modellbewertungsdaten die voreingestellte Modellanpassungsbedingung erfüllen, der zweite Teilnehmer das gemeinsame Trainingsmodell anpasst; und
das zweite teilnehmende Endgerät, das dazu konfiguriert ist, die vom ersten teilnehmenden Endgerät gesendete Modellbewertungsdatenanforderung zu empfangen; einen Probensatz zu bestimmen, der mit den in der Modellbewertungsdatenanforderung umfassten Datenaufteilungsinformationen übereinstimmt, wobei der übereinstimmende Probensatz markierte Daten zum Trainieren des Maschinenlernmodells umfasst; und Generieren von Modellbewertungsdaten, die den Effektindex angeben, basierend auf einem Trainieren des Maschinenlernmodells mit dem übereinstimmenden Probensatz; und
das zweite teilnehmende Endgerät, das weiter dazu konfiguriert ist, einen Probensatz zum Trainieren des Maschinenlernmodells zu erhalten und Proben aus dem Probensatz gemäß den Datenaufteilungsinformationen auszuwählen, um einen Probensatz zu bilden, der mit den in der Modellbewertungsdatenanforderung umfassten Datenaufteilungsinformationen übereinstimmt.

6. System nach Anspruch 5, wobei das erste teilnehmende Endgerät weiter für Folgendes konfiguriert ist: Generieren von Datenaufteilungsinformationen gemäß Merkmalsdimensionen von Proben im lokalen Probensatz, wobei die Datenaufteilungsinformationen verwendet werden, um ein Aufteilungsverfahren von Proben anzugeben.

7. System nach Anspruch 5 oder 6, wobei das erste teilnehmende Endgerät weiter für Folgendes konfiguriert ist:
Erhalten von Modellbewertungsdaten des Maschinenlernmodells vom zweiten teilnehmenden Endgerät; und
Anpassen des Maschinenlernmodells basierend auf den Modellbewertungsdaten.

8. Server, umfassend:
einen oder mehrere Prozessoren; und
eine Speichereinrichtung, die ein oder mehrere Programme speichert,
wobei das eine oder mehrere Programme, wenn sie durch den einen oder die mehreren Prozessoren ausgeführt werden, den einen oder die mehreren Prozessoren veranlassen, das Verfahren nach einem der Ansprüche 1 bis 3 zu implementieren.

9. Computerlesbares Speichermedium, das Computerprogramme speichert, wobei die Programme durch einen Prozessor ausgeführt werden, um das Verfahren nach einem der Ansprüche 1 bis 3 zu implementieren.

## Revendications

1. Procédé mis en œuvre par ordinateur pour optimiser l'entraînement de modèle par une pluralité de participants entraînant conjointement un modèle d'apprentissage automatique, comprenant :
la réception, par un serveur, d'une demande de données d'évaluation de modèle générée par et envoyée par un dispositif cible, dans lequel le dispositif cible est un premier participant à l'entraînement conjoint du modèle d'apprentissage automatique, dans lequel le serveur est un second participant à l'entraînement conjoint du modèle d'apprentissage automatique, dans lequel la demande de données d'évaluation de modèle est une demande générée selon une liste d'index de modèle prédéfinie, dans lequel la liste d'index de modèle prédéfinie comprend un index d'effet du modèle d'apprentissage automatique après avoir été entraîné par le second participant, et dans lequel la demande de données d'évaluation de modèle comprend des informations de division de données indiquant des identifications d'échantillon, les informations de division de données indiquent un procédé de division d'échantillon, dans lequel les données d'évaluation de modèle comprennent au moins un parmi : précision, taux de rappel, aire sous la courbe ROC, index de stabilité de population et perte logarithmique, dans lequel le premier participant détermine si les données d'évaluation de modèle répondent à une condition d'ajustement de modèle prédéfinie, et en réponse à la détermination que les données d'évaluation de modèle répondent à la condition d'ajustement de modèle prédéfinie, le second participant ajuste le modèle d'entraînement conjoint ;
la détermination, par le serveur, d'un ensemble d'échantillons sur la base de la demande de données d'évaluation de modèle, l'ensemble d'échantillons correspondant aux informations de division de données comprises dans la demande de données d'évaluation de modèle, dans lequel l'ensemble d'échantillons correspondant comprend des données étiquetées pour entraîner le modèle d'apprentissage automatique ; et
la génération, par un serveur, de données d'évaluation de modèle indiquant l'index d'effet sur la base de l'entraînement du modèle d'apprentissage automatique avec l'ensemble d'échantillons correspondant ; et
dans lequel la détermination, par le serveur, d'un ensemble d'échantillons sur la base de la demande de données d'évaluation de modèle comprend :
l'obtention, par le serveur, d'un ensemble d'échantillons pour l'entraînement du modèle d'apprentissage automatique ; et
la sélection, par le serveur, d'échantillons à partir de l'ensemble d'échantillons selon les informations de division de données, pour former un ensemble d'échantillons correspondant aux informations de division de données comprises dans la demande de données d'évaluation de modèle.

2. Procédé selon la revendication 1, dans lequel les données d'évaluation de modèle de génération comprennent :
la division de l'ensemble d'échantillons correspondant en un ensemble d'échantillons d'entraînement et un ensemble d'échantillons de test ; et
la génération d'informations de changement d'index du modèle d'apprentissage automatique en utilisant l'ensemble d'échantillons correspondant, dans lequel les informations de changement d'index du modèle d'apprentissage automatique sont utilisées pour indiquer le changement de données d'évaluation de modèle d'apprentissage automatique dans le temps.

3. Procédé selon la revendication 2, dans lequel la demande de données d'évaluation de modèle comprend en outre des informations de permission de recherche de données, dans lequel les informations de permission de recherche de données sont utilisées pour indiquer au moins une dimension des informations de changement d'index ;
et dans lequel le procédé comprends en outre :
l'extraction de données d'évaluation de modèle correspondant aux informations de permission de recherche de données à partir des informations de changement d'index ; et
envoyer les données d'évaluation de modèle correspondant au périphérique
cible.

4. Appareil pour optimiser l'entraînement de modèle par une pluralité de participants entraînant conjointement un modèle d'apprentissage automatique, comprenant :
une unité de réception, configurée pour recevoir une demande de données d'évaluation de modèle générée par et envoyée par un dispositif cible, dans lequel le dispositif cible est un premier participant à l'entraînement conjoint du modèle d'apprentissage automatique, dans lequel l'appareil est un second participant à l'entraînement conjoint du modèle d'apprentissage automatique, dans lequel la demande de données d'évaluation de modèle est une demande générée selon une liste d'index de modèle prédéfinie, dans lequel la liste d'index de modèle prédéfinie comprend un index d'effet du modèle d'apprentissage automatique après avoir été entraîné par le second participant, et dans lequel la demande de données d'évaluation de modèle comprend des informations de division de données indiquant des identifications d'échantillon, les informations de division de données indiquent un procédé de division d'échantillon, dans lequel les données d'évaluation de modèle incluent au moins un parmi : précision, taux de rappel, aire sous la courbe ROC, index de stabilité de population et perte logarithmique, dans lequel le premier participant détermine si les données d'évaluation de modèle répondent à une condition d'ajustement de modèle prédéfinie, et en réponse à la détermination que les données d'évaluation de modèle répondent à la condition d'ajustement de modèle prédéfinie, le second participant ajuste le modèle d'entraînement conjoint ;
une unité de détermination, configurée pour déterminer un ensemble d'échantillons sur la base de la demande de données d'évaluation de modèle, l'ensemble d'échantillons correspondant aux informations de division de données comprises dans la demande de données d'évaluation de modèle, dans lequel l'ensemble d'échantillons correspondant comprend des données étiquetées pour entraîner le modèle d'apprentissage automatique ; et
une unité de génération, configurée pour générer des données d'évaluation de modèle indiquant l'index d'effet sur la base de l'entraînement du modèle d'apprentissage automatique avec l'ensemble d'échantillons correspondant ; et
dans lequel l'unité de détermination, configurée en outre pour obtenir un ensemble d'échantillons pour entraîner le modèle d'apprentissage automatique, et sélectionner des échantillons à partir de l'ensemble d'échantillons selon les informations de division de données, pour former un ensemble d'échantillons correspondant aux informations de division de données comprises dans la demande de données d'évaluation de modèle.

5. Système pour optimiser l'entraînement de modèle par une pluralité de participants entraînant conjointement un modèle d'apprentissage automatique, comprenant :
un premier terminal participant, configuré pour : obtenir un ensemble d'échantillons local, dans lequel des échantillons dans cet ensemble d'échantillons local sont des données sans étiquette pour l'entraînement du modèle d'apprentissage automatique ; générer une demande de données d'évaluation de modèle sur la base de l'ensemble d'échantillons local ; envoyer la demande de données d'évaluation de modèle à un second terminal participant, dans lequel le second terminal participant et le premier terminal participant entraînent conjointement le modèle d'apprentissage automatique, dans lequel la demande de données d'évaluation de modèle est une demande générée selon une liste d'index de modèle prédéfinie, dans lequel la liste d'index de modèle prédéfinie comprend un index d'effet du modèle d'apprentissage automatique après avoir été entraîné par le second terminal participant, et dans lequel la demande de données d'évaluation de modèle comprend des informations de division de données indiquant des identifications d'échantillon, les informations de division de données indiquent un procédé de division d'échantillon, dans lequel les données d'évaluation de modèle incluent au moins un parmi : précision, taux de rappel, aire sous la courbe ROC, index de stabilité de population et perte logarithmique, dans lequel le premier participant détermine si les données d'évaluation de modèle répondent à une condition d'ajustement de modèle prédéfinie, et en réponse à la détermination que les données d'évaluation de modèle répondent à la condition d'ajustement de modèle prédéfinie, le second participant ajuste le modèle d'entraînement conjoint ; et
le second terminal participant, configuré pour recevoir la demande de données d'évaluation de modèle envoyée par le premier terminal participant; déterminer un ensemble d'échantillons correspondant aux informations de division de données comprises dans la demande de données d'évaluation de modèle, dans lequel l'ensemble d'échantillons correspondant comprend des données étiquetées pour l'entraînement du modèle d'apprentissage automatique ; et générer des données d'évaluation de modèle indiquant l'index d'effet sur la base de l'entraînement du modèle d'apprentissage automatique avec l'ensemble d'échantillons correspondant ; et
le second terminal participant, configuré en outre pour obtenir un ensemble d'échantillons pour entraîner le modèle d'apprentissage automatique, et sélectionner des échantillons à partir de l'ensemble d'échantillons selon les informations de division de données, pour former un ensemble d'échantillons correspondant aux informations de division de données comprises dans la demande de données d'évaluation de modèle.

6. Système selon la revendication 5, dans lequel le premier terminal participant est en outre configuré pour : générer des informations de division de données selon des dimensions caractéristiques d'échantillons dans l'ensemble d'échantillons local, dans lequel les informations de division de données sont utilisées pour indiquer un procédé de division d'échantillons.

7. Système selon la revendication 5 ou 6, dans lequel le premier terminal participant est en outre configuré pour :
obtenir des données d'évaluation de modèle d'apprentissage automatique à partir du second terminal participant ; et
ajuster le modèle d'apprentissage automatique sur la base des données d'évaluation de modèle.

8. Serveur, comprenant :
un ou plusieurs processeurs ; et
un appareil de stockage stockant un ou plusieurs programmes,
dans lequel l'un ou les plusieurs programmes, lorsqu'ils sont exécutés par l'un ou les plusieurs processeurs, amènent l'un ou les plusieurs processeurs à mettre en œuvre le procédé selon l'une quelconque des revendications 1 à 3.

9. Support de stockage lisible par ordinateur stockant des programmes informatiques, dans lequel les programmes sont exécutés par un processeur pour mettre en œuvre le procédé selon l'une quelconque des revendications 1 à 3.
